# FASCICULE DE BREVET EUROPEEN

(11) **EP 1 675 207 B1**
(45) Date de publication et mention de la délivrance du brevet: **03.10.2012**
(21) Numéro de dépôt: 05112756.1
(22) Date de dépôt: 22.12.2005
(51) Int. Cl.: H01M 10/04, H01M 10/0562, H01M 10/052, H01M 10/0585, H01M 6/40, H01M 4/04

(54) **Electrolyte structuré pour microbatterie**
Strukturierter Elektrolyt für Mikrobatterie
Structured electrolyte for microbattery

(30) Priorité: 23.12.2004 FR 0453185
(43) Date de publication de la demande: 28.06.2006
(73) Titulaire: Commissariat à l'Énergie Atomique et aux Énergies Alternatives, 75015 Paris (FR)
(72) Inventeur: Salot, Raphaël, 38250 Lans-en-Vercors (FR); Gaillard, Frédéric, 38500 Voiron (FR); Danel, Jean-Sébastien, 38130 Echirolles (FR); Laurent, Jean-Yves, 38420 Domene (FR)
(74) Mandataire: Poulin, Gérard

(56) Documents cités:
- WO-A-01/06578
- WO-A-99/65821
- US-A- 6 165 641

## Description

### DOMAINE TECHNIQUE

L'invention se rapporte au domaine des dispositifs de stockage d'énergie, et principalement des micro-batteries fabriquées en films minces par des techniques de dépôts sous vide.

Plus particulièrement, l'invention concerne une structuration de l'électrolyte permettant d'accroître la capacité d'une batterie en augmentant la surface d'échange d'ions des électrodes. L'invention se rapporte également à un procédé permettant de fabriquer une telle micro-batterie.

### ÉTAT DE LA TECHNIQUE ANTÉRIEURE

Parmi les dispositifs de stockage d'énergie, des micro-batteries particulièrement utilisées, dites « tout solide », sont sous la forme de films : tous les composants de la micro-batterie, c'est-à-dire les collecteurs de courant, les électrodes positive et négative, l'électrolyte, et même l'encapsulation, sont des couches minces, obtenues par dépôt, principalement par dépôt physique en phase vapeur (PVD) ou dépôt chimique en phase vapeur (CVD). Les techniques utilisées permettent la réalisation d'objets de formes quelconques.

Comme usuel, le principe de fonctionnement d'une telle batterie repose sur l'insertion et le retrait d'un ion de métal alcalin ou d'un proton dans et depuis l'électrode positive, et le dépôt ou l'extraction de cet ion sur et de l'électrode négative ; les principaux systèmes utilisent Li⁺ comme espèce ionique de transport de courant. La recharge d'une micro-batterie, c'est-à-dire le transfert des ions de l'anode vers la cathode, est en général complète après quelques minutes de chargement.

La plupart des micro-batteries actuelles sont réalisées sous forme planaire. Selon les matériaux utilisés, la tension de fonctionnement de ce type de batterie est comprise entre 1 et 4 V ; la valeur de la tension de fonctionnement n'est limitante que pour certaines applications, comme les capteurs ou actionneurs, qui demandent des tensions supérieures à quelques dizaines de volts.

La capacité surfacique classique d'une micro-batterie tout solide est de l'ordre de quelques 10 µAh/cm² à quelques centaines de µAh/cm², ce qui est faible et reste un facteur limitant pour son utilisation.

Afin d'augmenter la capacité, il est possible d'accroître les épaisseurs des couches d'électrodes. Cependant, la résistance plus élevée liée à la diffusion du lithium dans tout le matériau entraîne un moindre comportement en puissance.

Une autre solution proposée pour augmenter la capacité sans perdre le comportement en puissance est l'utilisation d'une surface développée plus importante. Le document US-A-6 495 283 décrit ainsi une micro-batterie dans laquelle l'une des couches inférieures, à savoir le substrat, le collecteur ou la cathode, présente une structure tridimensionnelle comprenant des cavités : les couches successives ultérieures sont déposées sur la structure tridimensionnelle, et forment ainsi des couches de plus grande surface développée.

Néanmoins, avec un tel système, il est difficile d'atteindre un fort ratio hauteur sur largeur des cavités : le dépôt par PVD, en particulier nécessaire pour l'électrolyte, ne permet pas un revêtement régulier et homogène de parois latérales (verticales) et de fond pour des cavités trop profondes et étroites. Par ailleurs, tout le volume servant à définir la structure tridimensionnelle est constitué par le matériau du substrat, qui est inactif électrochimiquement : la densité volumique d'énergie est faible.

WO 99/65821 décrit des microélectrodes obtenues par dépôt chimique en phase vapeur de nanotubes de carbone.

### EXPOSÉ DE L'INVENTION

L'invention a pour but de pallier les problèmes de l'état de la technique quant à la capacité du stockage et à la puissance de la fourniture d'énergie.

Plus particulièrement, l'invention préconise l'utilisation d'un électrolyte structuré dans un dispositif de stockage d'énergie. La couche d'électrolyte, déposée plane par des techniques habituelles, est ensuite usinée de façon à comprendre des cavités la traversant : ces cavités sont destinées à recevoir les matériaux d'électrode. Ainsi, la surface d'échange ionique est augmentée, alors que la taille générale de la batterie peut rester similaire, aussi minime que possible.

Sous un de ses aspects, l'invention concerne un procédé de fabrication d'une micro-batterie comprenant la création de cavités dans une couche d'électrolyte et le remplissage de ces cavités par un matériau de cathode et/ou d'anode. Le remplissage des cavités peut être sélectif entre anode et cathode, ou il est possible de créer les cavités en deux temps et de les remplir toutes à chaque fois.

De préférence, les cavités sont creusées à des endroits où le support de la couche d'électrolyte comprend un matériau collecteur. Selon le procédé de remplissage, le matériau collecteur peut être recouvert de catalyseur, par exemple pour une croissance de nanotubes en carbone ou de nanofils en silicium.

Il peut également être avantageux de graver certaines des électrodes, ou toutes, remplissant les cavités entre la surface supérieure et le fond en matériau collecteur, et de remplir cette gravure de matériau collecteur, afin d'augmenter la surface de collection. Une autre possibilité pour augmenter la surface de collection est de graver l'électrolyte, par exemple à proximité de certaines électrodes, ou toutes, et de remplir cette gravure de matériau collecteur.

Avantageusement, une fois les cavités remplies, la surface supérieure du dispositif est aplanie, et de préférence revêtue d'une couche d'encapsulation.

L'invention sous un autre aspect concerne un dispositif qui peut être fabriqué par le procédé décrit précédemment. En particulier, la micro-batterie selon l'invention comprend une couche d'électrolyte présentant des cavités la traversant. Les éléments d'anode et de cathode du dispositif de stockage d'énergie selon l'invention sont localisés dans les cavités de la couche d'électrolyte. Avantageusement, l'électrolyte est un oxynitrure de lithium, de préférence du LiPON.

De préférence, les cavités s'étendent de façon normale à la surface de la couche d'électrolyte, et leur section peut être circulaire ou rectangulaire ou en nid d'abeille. Les éléments d'anode et de cathode sont alternés, et ne font pas saillie de la couche d'électrolyte ; en particulier, les cavités forment de préférence des bandes alternées.

Avantageusement, le matériau collecteur est localisé au fond des cavités, et il peut être choisi, par exemple avec un catalyseur de surface, en fonction du matériau de l'électrode et du procédé de remplissage.

Le dispositif de stockage d'énergie selon l'invention peut être encapsulé afin d'isoler les éléments échangeurs d'ion de l'extérieur.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.

Les figures 1A à 1G illustrent schématiquement un procédé de fabrication selon l'invention.

Les figures 2A à 2E montrent des architectures de structuration de l'électrolyte selon l'invention.

### EXPOSÉ DÉTAILLÉ DE MODES DE RÉALISATION PARTICULIERS

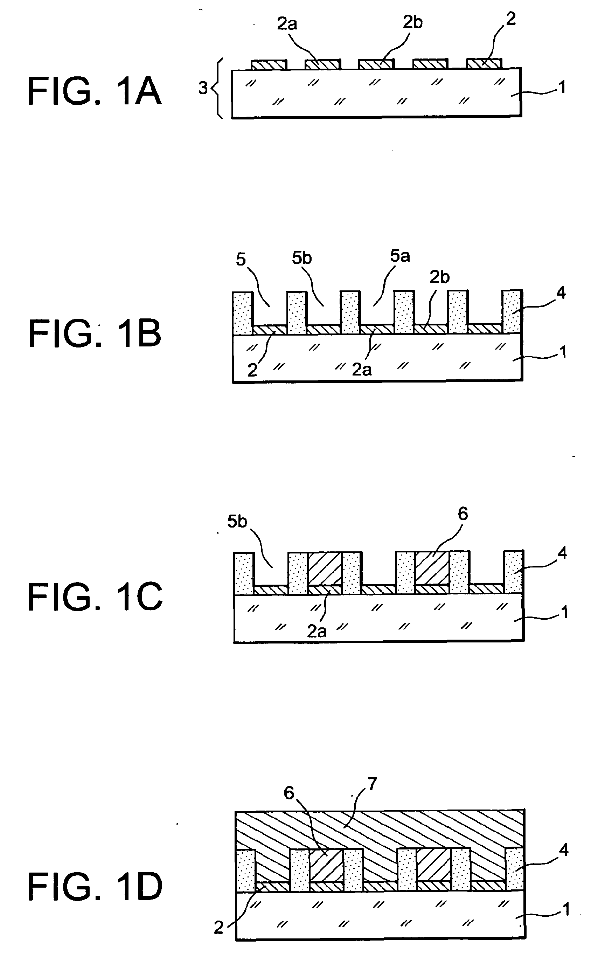

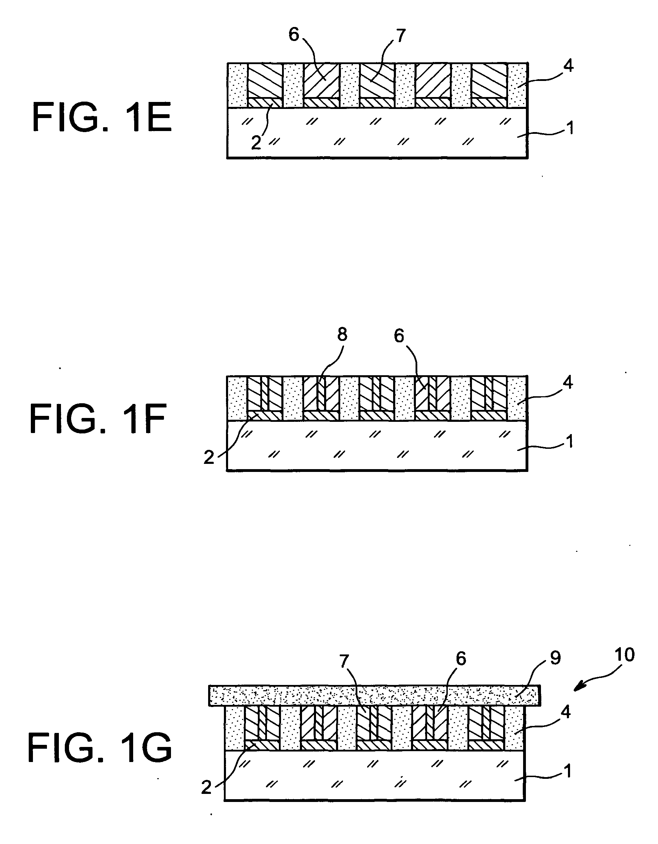

Un dispositif de stockage d'énergie comprend, de façon habituelle, des couches successives de substrat, d'un premier matériau collecteur, d'une première électrode, d'électrolyte, d'une deuxième électrode, d'un deuxième collecteur. Ces différents éléments peuvent avoir une structure tridimensionnelle, par exemple dans le cas de micro-batteries telles que schématisées en figure 1 du document US-A-6 495 283. L'étape limitante du procédé de fabrication permettant d'augmenter la surface développée d'échange d'ions, c'est-à-dire la surface relative des anode et cathode par rapport à la taille du composé, est la mise en place de la couche d'électrolyte.

Selon l'invention, il est ainsi proposé de structurer en trois dimensions la micro-batterie grâce à la couche d'électrolyte : l'électrolyte peut alors être mis en place selon des procédés classiques, notamment par dépôt PVD, la réalisation de l'augmentation de la surface d'échange étant ensuite effectuée sur cette base. Grâce à un tel procédé, on obtient des micro-batteries dont la capacité est fortement augmentée, même si elles peuvent être de mêmes formes et dimensions que celles existantes.

Dans un procédé de réalisation d'un dispositif de stockage d'énergie selon l'invention, un substrat 1 plan classique peut être utilisé, par exemple en silicium. Des plages 2 de matériau collecteur de courant sont alors mises en place sur une surface du substrat 1 (figure 1A) ; les techniques habituelles peuvent être utilisées, en particulier le dépôt avec un masque approprié, ou la photo lithogravure. Les plages ainsi formées correspondent aux collecteurs anode 2a et cathode 2b : il est possible éventuellement de procéder en deux étapes si des matériaux différents sont souhaités pour chacun, ou le même matériau peut être déposé pour les deux électrodes. La forme du ou des masques est choisie également en fonction de l'utilisation future de la micro-batterie et de la géométrie d'électrode et de connectique, tel qu'il apparaîtra plus clairement plus loin.

Le support 3 ainsi formé comprend une première surface alternant plages collectrices 2 et substrat 1.

Une couche d'électrolyte 4 est mise en place sur la première surface. Par exemple, un électrolyte de type LiPON est déposé par PVD, que ce soit par dépôt radiofréquence classique par magnétron, ou par faisceau d'électrons EBPVD (« Electron Beam Physical Vapor Déposition ») pour gagner en vitesse de dépôt.

La couche d'électrolyte 4 a une épaisseur totale supérieure à celle habituellement utilisée ; en particulier, la distance h séparant la première surface de la deuxième surface de la couche d'électrolyte 4 correspond avantageusement à l'épaisseur habituelle des micro-batteries, soit entre 8 et 100 µm, de préférence de l'ordre de 20 µm, alors qu'elle est de l'ordre de 1 µm dans une architecture classique (dans laquelle la couche d'électrolyte est déposée entre les deux couches d'électrode) .

La couche d'électrolyte 4 est ensuite gravée localement, préférentiellement par gravure sèche, jusqu'à la première surface du support 3 : figure 1B. Il serait envisageable également de reporter sur un support plan 3 un électrolyte solide 4 sous forme d'un film autosupporté qui aurait déjà été structuré.

Avantageusement, les cavités 5 créées par la gravure sont toutes localisées au niveau des plages 2 de matériau collecteur. Une gravure permettant un recouvrement partiel des collecteurs 2 par de l'électrolyte 4, c'est-à-dire des cavités 5 de taille inférieure aux plages collectrices 2a, 2b peut s'avérer favorable pour un meilleur contrôle des interfaces électrode/électrolyte dans le cas notamment de dépôts par électrodéposition.

Les cavités 5 peuvent être de forme et taille variées. Avantageusement, les cavités 5 sont perpendiculaires au support 3, c'est-à-dire verticales selon la représentation graphique.

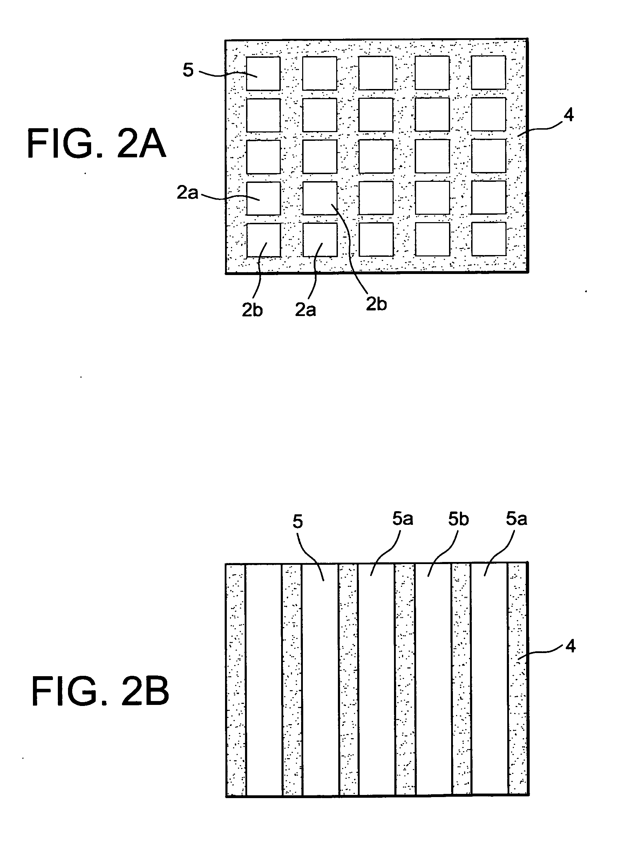

Selon un mode de réalisation préféré, les cavités 5 ont une section rectangulaire, carrée ou circulaire et sont disposées selon un maillage carré régulier sur la première surface (figure 2A) ; le diamètre ou côté des cavités 5 fait par exemple 2 µm pour un pas de l'ordre de 10 µm. Selon un autre mode de réalisation préféré, les cavités 5 s'étendent longitudinalement d'un bord à l'autre du substrat 3 et sont parallèles entre elles (figure 2B), larges de 2 µm et au pas de 10 µm, ce qui peut donner lieu à une connectique des électrodes sous forme de peignes imbriqués.

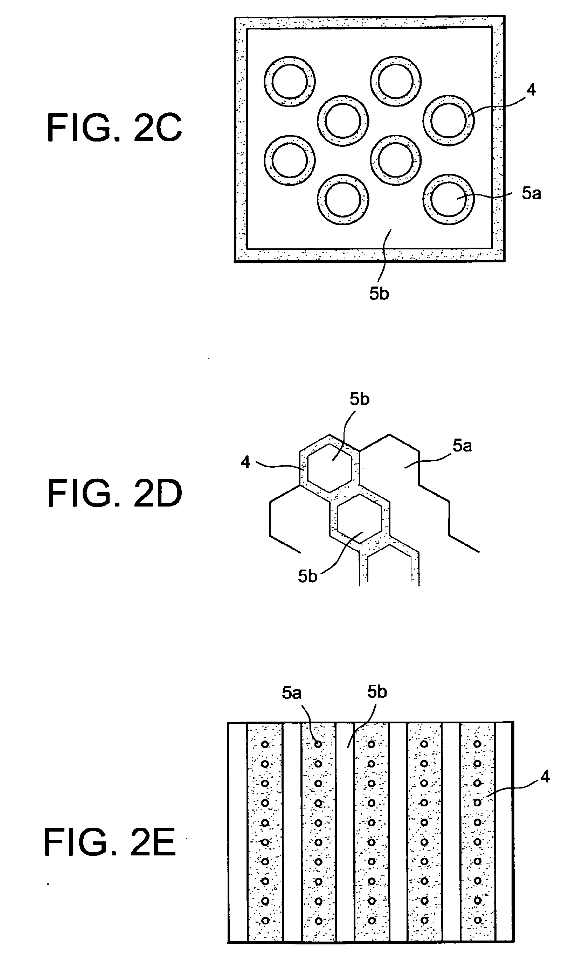

Il est possible également de creuser la couche d'électrolyte 4 de façon à ne laisser que des parois séparant des cavités 5a, 5b occupant la majorité de la surface : voir figure 2C. Dans ce cas en particulier, une structure en nid d'abeille (figure 2D), de taille de cavités 5 de l'ordre de 8 à 10 µm par exemple, permet en outre de rigidifier la structure de l'électrolyte 4 pour la suite du procédé de fabrication. Par rapport à la structure en nid d'abeille représentée dans la figure 2D, une structure sous forme de carrés ou carrés tronqués (non illustrée) permettrait en outre de maximiser la surface d'échange entre cathode et anode.

Toute autre géométrie, régulière ou non, est bien entendu possible. En particulier, on peut choisir une certaine forme pour les cavités 5a correspondant aux plages 2a de collecteur d'anode, comme des cylindres, dans lesquels pourrait s'effectuer une croissance de nanotubes, et une autre géométrie pour les cavités 5b correspondant à aux futurs éléments de cathode, par exemple des rainures longitudinales (figure 2E).

Il est avantageux que le rapport entre la surface développée de la couche d'électrolyte 4 et la deuxième surface soit supérieur à cinq, par exemple de l'ordre de dix, voire plus, c'est-à-dire que la surface cumulée des parois verticales des cavités 5 est supérieure ou égale à quatre fois la surface du substrat 3.

Les éléments d'électrode sont ensuite mis en place par remplissage des cavités 5.

Selon un premier mode de réalisation, une première électrode 6 est d'abord déposée dans certaines premières cavités 5b (figure 1C). Par exemple si l'élément d'électrode 6 remplit la cavité par électrodéposition, le procédé implique d'appliquer une tension à l'endroit où le dépôt est effectué : il est possible de sélectionner parmi les cavités 5 celles 5b qui seront remplies par la première électrode 6, par exemple une cathode en LiCoO₂. Ensuite, la deuxième électrode 7 est mise en place, par exemple par dépôt CVD, dans les autres deuxièmes cavités 5a qui n'ont pas été remplies, et éventuellement au dessus de l'ensemble : figure 1D.

Bien que le précédent type de dépôt limite le nombre de gravures de la couche d'électrolyte 4, il est possible également d'utiliser un procédé de mise en place de la première électrode 6 qui ne soit pas sélectif, par exemple un dépôt CVD. Dans ce cas, la couche d'électrolyte 4 peut être gravée en plusieurs fois : une première gravure libère les cavités 5b remplies par la première électrode 6, puis la couche d'électrolyte 4 est gravée une seconde fois pour former les deuxièmes cavités 5a qui seront remplies par la deuxième électrode 7.

Le remplissage des cavités 5 peut être effectué par croissance de nanotubes ou nanofils.

Lors du dépôt des éléments d'électrode 6, 7, la couche de matériau d'électrode peut être d'épaisseur supérieure à la profondeur h des cavités 5. Les surépaisseurs sont dans ce cas supprimées, par gravure ou polissage, avant les étapes ultérieures.

La surface opposée au support 3 est de préférence mise à plat, de sorte que la deuxième surface est parallèle à la première surface du substrat 1 : figure 1E.

Dans un cas particulier, les couches d'électrodes 6, 7 remplissant les cavités, ou certaines d'entre elles seulement, peuvent être également gravées pour déposer, en leur milieu par exemple, un matériau collecteur 8, le même que celui 2 présent au fond de la cavité 5 de préférence. Grâce à cette étape (figure 1F), la surface de contact entre collecteur de courant 2, 8 et électrode 6, 7 est augmentée, et le parcours des électrons dans le matériau d'électrode est diminué. Cette géométrie est avantageuse en particulier en présence de fortes densités de courant, et permet d'éviter les limitations pour un bon fonctionnement en puissance puisque le débit n'est pas limité.

Une autre possibilité intéressante à cette fin est de graver dès le début du procédé l'électrolyte 4 et de remplir ces zones gravées de matériau collecteur 8 qui prendra le contact électrique au fond de la gravure sur une zone collectrice 2.

Il est avantageux de procéder à l'encapsulation du dispositif ainsi formé, par exemple par dépôt sur la deuxième surface d'une couche mince 9 de type parylène/aluminium/parylène : figure 1G.

Les matériaux utilisés dans un procédé et pour un dispositif 10 selon l'invention peuvent être divers et être mis en place selon toute technique connue, en particulier :
- Les collecteurs de courant 2, 8 sont métalliques et peuvent être par exemple des dépôts à base de Pt, Cr, Au, Ti. Notamment, en ce qui concerne l'étape 1F, une électrodéposition ou un dépôt chimique en phase vapeur de métal organique (MOCVD, « Métal Organic Chemical Vapor Déposition ») sont envisageables.
- L'électrode positive 6 peut être notamment constituée de LiCoO₂ LiNiO₂, LiMn₂O₄, CuS, CuS₂, WO_{y}S_{z}, TiO_{y}S_{z}, V₂O₅, déposés par technique classique, avec un éventuel recuit thermique pour augmenter la cristallisation et les capacités d'insertion (notamment pour les oxydes lithiés).
- L'électrode négative 7 peut être du lithium métallique déposé par évaporation thermique ou un alliage métallique à base de lithium. Cependant, l'anode 7 comprend de préférence un matériau pouvant insérer le lithium : germanium, Si-Ge, argent, étain, SiTON, SnNₓ, InNₓ, SnO₂... et en particulier silicium ou carbone.
- L'électrolyte 4 est un bon conducteur ionique et un isolant électronique, par exemple un matériau vitreux à base d'oxyde de bore, des sels ou des oxydes de lithium, en particulier un oxynitrure de lithium. De préférence, l'électrolyte est à base de phosphate, comme du LiPON, ou du LiSiPON.
- La couche d'encapsulation 9, qui a pour objet de protéger les éléments actifs 4, 6, 7, 8 de l'environnement extérieur, et spécifiquement de l'humidité, peut être fabriquée à partir de polymère (comme l'hexaméthyldisiloxane ou le parylène), de céramique ou de métal, ainsi que par une superposition de couches de ces différents matériaux.

Selon un mode de réalisation préféré, l'anode 7 est composée de nanotubes en carbone, ou de nanofils en silicium. Dans ce cas, avantageusement, la face de contact du matériau collecteur 2a et de l'électrode 7 comprend un catalyseur de croissance des nanotubes ou nanofils, comme par exemple Ni ou Co. Par exemple peuvent être utilisés les procédés décrits dans les documents de Sharma S et coll. (« Diameter control of Ti-catalyzed silicon nanowires », J Crystal Growth 2004 ; 267 : 613-618), ou de Tang H et coll. (« High dispersion and electrocatalytic properties of platinum on well-aligned carbon nanotube arrays », Carbon 2004 ; 42 : 191-197).

Dans le cas où l'application le permet, des électrolytes 4 cristallisés, du type Li₁₊ₓCrₓGe₂₋ₓ(PO₄)₃ ou (Li_{0,5}La_{0,5}) TiO₃, nécessitant un recuit en température, peuvent être utilisés. Le recuit peut alors être effectué préalablement à la gravure ou au dépôt du matériau d'électrode, ou couplé à l'opération de dépôt d'une des électrodes ou des deux : les procédés de dépôt CVD nécessitant souvent de chauffer le substrat 3, la cristallisation de l'électrolyte 4 a lieu de façon concomitante.

Le procédé selon l'invention permet d'obtenir une batterie 10 dont l'architecture est nouvelle, la couche d'électrolyte 4 comprenant des cavités 5 traversantes dans lesquelles sont localisées les électrodes 6, 7, comprenant habituellement des éléments distincts d'électrode. La surface d'échange étant augmentée, par exemple d'un facteur cinq ou dix, par rapport à une architecture plane, la capacité des dispositifs de stockage 10 selon l'invention est accrue. En effet, contrairement aux systèmes existants dans lesquels la surface est augmentée artificiellement par création de tranchées, les microbatteries selon l'invention sont disposées perpendiculairement au substrat 1, ce qui optimise la surface utile.

Par ailleurs, une telle structure permet de définir, sur un même substrat, une multitude de batteries individuelles qui constituent ensuite une matrice permettant des connexions en série ou en parallèle selon l'application choisie : cette architecture permet de réaliser des couplages de différentes formes entre les collecteurs de courant positif 2b et négatif 2a. Il est ainsi possible d'obtenir des systèmes à forte tension grâce à un couplage en série des plages collectrices 2, ou à forte capacité par un couplage en parallèle des électrodes 6 et 7 : un simple changement du masque utilisé pour la mise en place de la première couche de matériau, à savoir le collecteur de courant 2, permet la réalisation des différents systèmes par le même procédé et avec les mêmes paramètres. Ceci permet ainsi la réutilisation, avantageuse économiquement, de niveaux de masques existants.

Un réseau de micro-interrupteurs peut également être couplé à la matrice de batteries, permettant un changement des types de connexions à la demande.

La reprise des contacts des électrodes négatives ou positives (connectique) est propre à chaque type de structure. Par exemple, pour une connectique « en peigne », les collecteurs de courant peuvent être réalisés directement sur le substrat si ce dernier est isolant électronique. Pour un réseau carré, la connectique en carré s'effectue sous la forme de vias enterrés afin de reporter les contacts dans une zone extérieure sans créer de courts-circuits.

Parmi les applications visées, outre les cartes à puces et les étiquettes « intelligentes », qui permettent par exemple la mesure récurrente de paramètres par des implants miniaturisés, figure l'alimentation de microsystèmes. Ces applications imposent que toutes les couches nécessaires au fonctionnement de la batterie soient fabriquées avec des techniques compatibles avec les procédés industriels de la microélectronique, ce qui est le cas du dispositif et du procédé selon l'invention.

## Revendications

1. Dispositif de stockage d'énergie (10) comprenant au moins un élément de cathode (6), un élément d'anode (7) et une couche d'électrolyte (4) comprenant une première et une deuxième surfaces, **caractérisé en ce que** la couche d'électrolyte (4) comprend des cavités (5) la traversant entre les première et deuxième surfaces, les éléments d'électrode (6, 7) étant localisés dans les cavités (5).

2. Dispositif selon la revendication 1 dans lequel les cavités (5) s'étendent sensiblement de façon normale à la première et la deuxième surface.

3. Dispositif selon l'une des revendications 1 à 2 dans lequel des cavités (5) sont à section rectangulaire ou ronde, ou agencées en nid d'abeille, dans les première et deuxième surfaces.

4. Dispositif selon l'une des revendications 1 à 2 dans lequel les cavités (5a, 5b) sont des bandes traversant le support (3) entre deux bords opposés.

5. Dispositif selon l'une des revendications 1 à 4 dans lequel le rapport entre la surface développée et la deuxième surface de la couche d'électrolyte (4) est supérieur ou égal à 5.

6. Dispositif selon l'une des revendications 1 à 5 dans lequel les cavités (5a, 5b) comprenant les éléments d'anode et de cathode sont alternées.

7. Dispositif selon l'une des revendications 1 à 6 dans lequel les cavités (5) comprennent un matériau collecteur (2) au niveau de la première surface.

8. Dispositif selon la revendication 7 dans lequel le matériau collecteur (2a) de certaines cavités (5a) comprend un catalyseur sur la face opposée à la première surface.

9. Dispositif selon la revendication 8 dans lequel les éléments d'électrode (7) dans les cavités (5a) où le catalyseur est présent sont composés de nanotubes ou nanofils.

10. Dispositif selon l'une des revendications 1 à 9 dans lequel les éléments d'anode (7) sont composés de carbone ou de silicium.

11. Dispositif selon l'une des revendications 1 à 10 dans lequel les éléments d'électrode (6, 7) s'étendent entre la première et la deuxième surface et remplissent les cavités (5).

12. Dispositif selon la revendication 11 comprenant en outre une couche d'encapsulation (9) au niveau de la deuxième surface.

13. Dispositif selon l'une des revendications 1 à 12 dans lequel la couche d'électrolyte (4) comprend un oxynitrure de lithium, de préférence à base de phosphate.

14. Procédé de fabrication d'un dispositif de stockage d'énergie (10) comprenant la mise en place d'un support (3) ayant une première surface, le dépôt d'une couche d'électrolyte (4) sur la première surface du support (3) et présentant une deuxième surface opposée à la première surface, la structuration de la couche d'électrolyte (4) de façon à créer des cavités (5) entre les première et deuxième surfaces, le remplissage des cavités (5) par un matériau d'anode et/ou de cathode (6, 7).

15. Procédé selon la revendication 14 dans lequel le remplissage des cavités (5) comprend le remplissage de certaines cavités (5b) par un premier matériau (6) parmi les matériaux d'anode et de cathode, puis le remplissage des autres cavités (5a) par le deuxième matériau (7) parmi les matériaux d'anode et de cathode.

16. Procédé selon la revendication 14 dans lequel le remplissage des cavités (5) comprend le dépôt d'un premier matériau (6) parmi les matériaux d'anode et de cathode dans les cavités (5), et comprenant en outre ensuite la création d'autres cavités (5a) dans la couche d'électrolyte (4) entre la première et la deuxième surface, puis le dépôt du deuxième matériau (7) parmi les matériaux d'anode et de cathode dans les autres cavités (5a).

17. Procédé selon l'une des revendications 14 à 16 dans lequel la mise en place du support (3) comprend la mise à disposition d'un substrat (1), le dépôt d'un matériau collecteur de courant (2) sur le substrat (1), la première surface du support (3) étant composée de plages de matériau collecteur (2) espacées par du substrat (1).

18. Procédé selon la revendication 17 dans lequel les cavités (5) de la couche d'électrolyte (4) sont situées au niveau des plages de matériau collecteur (2).

19. Procédé selon l'une des revendications 17 à 18 dans lequel des plages de matériau collecteur (2a) sont revêtues de catalyseur préalablement au remplissage.

20. Procédé selon la revendication 19 dans lequel le remplissage des cavités (5a) contenant le catalyseur se fait par croissance de nanotubes de carbone ou de nanofils de silicium.

21. Procédé selon l'une des revendications 14 à 20 comprenant la gravure de l'électrolyte (4) et le remplissage des zones gravées par un matériau collecteur (8).

22. Procédé selon l'une des revendications 14 à 20 comprenant la gravure d'au moins une électrode (6, 7) remplissant une cavité (5) entre la première et la deuxième surface.

23. Procédé selon la revendication 22 dans lequel la gravure est remplie de matériau collecteur (8).

24. Procédé selon l'une des revendications 14 à 23 comprenant ensuite l'aplanissement de la surface du composant fabriqué opposée à la première surface.

25. Procédé selon la revendication 24 comprenant en outre l'encapsulation (9) du composant aplani.

## Claims

1. Energy storage device (10) comprising at least a cathode element (6), an anode element (7) and an electrolyte layer (4) comprising a first and a second surface, **characterised in that** the electrolyte layer (4) comprises cavities (5) crossing through it between the first and second surfaces, the electrode elements (6, 7) being localised in the cavities (5).

2. Device according to claim 1 wherein the cavities (5) extend substantially normal to the first and the second surface.

3. Device according to one of claims 1 to 2 wherein the cavities (5) are of rectangular or round section, or arranged in honeycomb pattern, in the first and second surfaces.

4. Device according to one of claims 1 to 2 wherein the cavities (5a, 5b) are strips crossing the support (3) between two opposite edges.

5. Device according to one of claims 1 to 4 wherein the ratio between the developed surface and the second surface of the electrolyte layer (4) is greater than or equal to 5.

6. Device according to one of claims 1 to 5 wherein the cavities (5a, 5b) comprising the anode and cathode elements are alternated.

7. Device according to one of claims 1 to 6 wherein the cavities (5) comprise a collector material (2) at the level of the first surface.

8. Device according to claim 7 wherein the collector material (2a) of some cavities (5a) comprises a catalyst on the face opposite to the first surface.

9. Device according to claim 8 wherein the electrode elements (7) in the cavities (5a) where the catalyst is present are composed of nanotubes or nanowires.

10. Device according to one of claims 1 to 9 wherein the anode elements (7) are composed of carbon or silicon.

11. Device according to one of claims 1 to 10 wherein the electrode elements (6, 7) extend between the first and the second surface and fill the cavities (5).

12. Device according to claim 11 further comprising an encapsulation layer (9) at the second surface.

13. Device according to one of claims 1 to 12 wherein the electrolyte layer (4) comprises a lithium oxynitride, preferably phosphate based.

14. Method for manufacturing an energy storage device (10) comprising: putting in place a support (3) having a first surface, depositing an electrolyte layer (4) on the first surface of said support (3) and having a second surface opposite to the first surface, structuring the electrolyte layer (4) in such a way as to create cavities (5) between the first and second surfaces, filling the cavities (5) by an anode and/or cathode material (6, 7).

15. Method according to claim 14 wherein filling the cavities (5) comprises filling some cavities (5b) by a first material (6) among the anode and cathode materials, and then filling other cavities (5a) by the second material (7) among the anode and cathode materials.

16. Method according to claim 14 wherein filling the cavities (5) comprises depositing a first material (6) among the anode and cathode materials in the cavities (5), and then further comprising: creating other cavities (5a) in the electrolyte layer (4) between the first and the second surface, followed by depositing the second material (7) among the anode and cathode materials in the other cavities (5a).

17. Method according to one of claims 14 to 16 wherein putting in place the support (3) comprises providing a substrate (1), depositing a current collector material (2) on said substrate (1), the first surface of support (3) being composed of patches of collector material (2) spaced out by the substrate (1).

18. Method according to claim 17 wherein the cavities (5) of the layer of electrolyte (4) are located at the level of the patches of collector material (2).

19. Method according to one of claims 17 to 18 wherein the patches of collector material (2a) are coated with catalyst prior to filling.

20. Method according to claim 19 wherein filling the cavities (5a) containing the catalyst is achieved by growth of carbon nanotubes or silicon nanowires.

21. Method according to one of claims 14 to 20 comprising etching the electrolyte (4) and filling the etched zones by a collector material (8).

22. Method according to one of claims 14 to 20 comprising etching at least one electrode (6, 7) filling a cavity (5) between the first and the second surface.

23. Method according to claim 22 wherein the etching is filled with collector material (8).

24. Method according to one of claims 14 to 23 further comprising levelling off the surface of the manufactured component opposite to the first surface.

25. Method according to claim 24 further comprising the encapsulation (9) of the levelled off component.

## Patentansprüche

1. Vorrichtung zur Speicherung von Energie (10), umfassend mindestens ein Kathodenelement (6), ein Anodenelement (7) und eine Elektrolytschicht (4), welche eine erste und eine zweite Oberfläche umfasst, **dadurch gekennzeichnet, dass** die Elektrolytschicht (4) Kavitäten umfasst (5), die sie zwischen den ersten und zweiten Oberflächen durchqueren, wobei die Elektrodenelemente (6, 7) sich in den Kavitäten (5) befinden.

2. Vorrichtung gemäß Anspruch 1, wobei sich die Kavitäten (5) im Wesentlichen normal zur ersten und zur zweiten Oberfläche erstrecken.

3. Vorrichtung gemäß einem der Ansprüche 1 bis 2, wobei die Kavitäten (5) in den ersten und zweiten Oberflächen einen rechteckigen oder runden Querschnitt aufweisen oder als Wabenmuster anbeordnet sind.

4. Vorrichtung gemäß einem der Ansprüche 1 bis 2, wobei die Kavitäten (5a, 5b) Streifen sind, die den Träger (3) zwischen zwei gegenüberliegenden Seiten durchqueren.

5. Vorrichtung gemäß einem der Ansprüche 1 bis 4, wobei das Verhältnis zwischen der entwickelten Oberfläche und der zweiten Oberfläche der Elektrolytschicht (4) größer als oder gleich 5 ist.

6. Vorrichtung gemäß einem der Ansprüche 1 bis 5, wobei die Kavitäten (5a, 5b), die die Anoden- und Kathodenelemente umfassen, sich abwechseln.

7. Vorrichtung gemäß einem der Ansprüche 1 bis 6, wobei die Kavitäten (5) ein Kollektormaterial (2) auf der Ebene der ersten Oberfläche umfassen.

8. Vorrichtung gemäß Anspruch 7, wobei das Kollektormaterial (2a) gewisser Kavitäten (5a) einen Katalysator auf der Fläche, die der ersten Oberfläche gegenüberliegt, umfasst.

9. Vorrichtung gemäß Anspruch 8, wobei die Elektrodenelemente (7) in den Kavitäten (5a), wo der Katalysator vorhanden ist, aus Nanoröhrchen oder Nanofasern zusammengesetzt sind.

10. Vorrichtung gemäß einem der Ansprüche 1 bis 9, wobei die Anodenelemente (7) aus Kohlenstoff oder Silicium zusammengesetzt sind.

11. Vorrichtung gemäß einem der Ansprüche 1 bis 10, wobei sich die Elektrodenelemente (6, 7) zwischen der ersten und der zweiten Oberfläche erstrecken und die Kavitäten (5) ausfüllen.

12. Vorrichtung gemäß Anspruch 11, weiterhin umfassend eine Verkapselungsschicht (9) auf der Ebene der zweiten Oberfläche.

13. Vorrichtung gemäß einem der Ansprüche 1 bis 12, wobei die Elektrolytschicht (4) ein Lithiumoxynitrid umfasst, bevorzugt auf der Basis von Phosphat.

14. Verfahren zur Herstellung einer Vorrichtung zur Speicherung von Energie (10), umfassend das Bereitstellen eines Trägers (3), der eine erste Oberfläche aufweiset, das Ausbringen einer Elektrolytschicht (4) auf der ersten Oberfläche des Trägers (3), welcher auch eine zweite Oberfläche aufweiset, die der ersten Oberfläche gegenüberliegt, die Strukturierung der Elektrolytschicht (4), um Kavitäten (5) zwischen den ersten und zweiten Oberflächen zu schaffen, das Auffüllen der Kavitäten (5) mit einem Anoden- und/oder Kathodenmaterial (6, 7).

15. Verfahren gemäß Anspruch 14, wobei das Auffüllen der Kavitäten (5) das Auffüllen gewisser Kavitäten (5b) mit einem ersten Material (6) aus den Anoden- und Kathodenmaterialien, dann das Auffüllen der anderen Kavitäten (5a) mit dem zweiten Material (7) aus den Anoden- und Kathodenmaterialien umfasst.

16. Verfahren gemäß Anspruch 14, wobei das Auffüllen der Kavitäten (5) das Ausbringen eines ersten Materials (6) aus den Anoden- und Kathodenmaterialien in den Kavitäten (5) umfasst und weiterhin anschließen die Schaffung anderer Kavitäten (5a) in der Elektrolytschicht (4) zwischen der ersten und der zweiten Oberfläche umfasst, dann das Aufbringen des zweiten Materials (7) aus den Anoden- und Kathodenmaterialien in den anderen Kavitäten (5a).

17. Verfahren gemäß einem der Ansprüche 14 bis 16, wobei das Bereitstellen des Trägers (3) die Bereitstellung eines Substrats (1) umfasst, das Aufbringen eines Stromkollektormaterials (2) auf dem Substrat (1), wobei die erste Oberfläche des Trägers (3) aus Bereichen aus Kollektormaterial (2), die durch das Substrat (1) beabstandet sind, zusammengesetzt ist.

18. Verfahren gemäß Anspruch 17, wobei die Kavitäten (5) der Elektrolytschicht (4) auf der Ebene der Bereiche aus Kollektormaterial (2) gelegen sind.

19. Verfahren gemäß einem der Ansprüche 17 bis 18, wobei die Bereiche aus Kollektormaterial (2a) vor dem Auffüllen mit Katalysator beschichtet werden.

20. Verfahren gemäß Anspruch 19, wobei das Auffüllen der Kavitäten (5a), die den Katalysator enthalten, mittels Aufwachsens von Nanoröhrchen aus Kohlenstoff oder Nanofasern aus Silicium erfolgt.

21. Verfahren gemäß einem der Ansprüche 14 bis 20, umfassend das Ätzen des Elektrolyten (4) und das Auffüllen der geätzten Bereiche mit einem Kollektormaterial (8).

22. Verfahren gemäß einem der Ansprüche 14 bis 20, umfassend das Ätzen mindestens einer Elektrode (6, 7), die eine Kavität (5) zwischen der ersten und der zweiten Oberfläche auffüllt.

23. Verfahren gemäß Anspruch 22, wobei die Ätzung mit Kollektormaterial (8) aufgefüllt wird.

24. Verfahren gemäß einem der Ansprüche 14 bis 23, umfassend anschließend die Abflachung der Oberfläche des hergestellten Bauelements, die der ersten Oberfläche gegenüberliegt.

25. Verfahren gemäß Anspruch 24, weiterhin umfassend die Verkapselung (9) des abgeflachten Bauelements.
